# EUROPEAN PATENT APPLICATION

(11) **EP 4 651 279 A1**
(43) Date of publication of application: **19.11.2025**
(21) Application number: 23916191.2
(22) Date of filing: 11.12.2023
(51) Int. Cl.: H01M 50/184, H01M 50/105, H01M 50/119, H01M 50/121, H01M 50/124, H01M 50/133, H01M 50/178, H01M 50/186, H01M 50/193, H01M 50/211, H01M 50/505, H01M 50/51, H01M 50/548, H01M 50/553, H01M 50/566

(54) **LAMINATED BATTERY, BATTERY STACK, AND LAMINATED BATTERY MANUFACTURING METHOD**

(30) Priority: 10.01.2023 JP 2023001929
(71) Applicant: TOYOTA JIDOSHA KABUSHIKI KAISHA, Toyota-shi Aichi 471-8571 (JP)
(72) Inventor: Nagata, Yuka, Toyota-shi, Aichi 471-8571 (JP)
(74) Representative: D Young & Co LLP
(86) International application number: PCT/JP2023/044233
(87) International publication number: WO 2024/150576

(57) **Abstract**

A laminated battery of the present disclosure is a laminated battery. The laminated battery has an electrode body, a side surface member disposed at a side surface of the electrode body, a laminate sheet covering the electrode body, and a tab film disposed between the side surface member and the laminate sheet. The side surface member and the laminate sheet are welded via the tab film. The tab film has an inner excess resin portion projecting out from an end, which is a side of at the electrode body, of the side surface member.

## Description

### Technical Field

The present disclosure relates to a laminated battery, a battery stack, and a method of manufacturing a laminated battery.

### Background Art

Laminated batteries are known as thin, lightweight batteries. In a laminated battery, an electrode body is accommodated in an exterior body (hereinafter also called "laminate exterior body") that uses a laminate sheet.

Patent Document 1 discloses a laminated battery. As illustrated in Fig. 15, laminated battery 900 disclosed in Patent Document 1 has an electrode body 910, a laminate exterior body 920, and a tab film 930. The electrode body 910 has an electrode body portion 911, a terminal portion 912 that is flat-plate-shaped, and a tab lead portion 913 that electrically connects the electrode body portion 911 and the terminal portion 912. The tab lead portion 913 is mounted to main surface S912 of the terminal portion 912. The laminate exterior body 920 has a bag-shaped portion 921 that accommodates the electrode body portion 911, and an edge portion 922 that nips and seals the terminal portion 912. The tab film 930 is formed of a thermoplastic resin. The tab film 930 has a welded portion 931 that is nipped between the terminal portion 912 and the edge portion 922 and welds the terminal portion 912 and the edge portion 922. The tab film 930 does not project out from an inner side end E912 of the terminal portion 912 toward a side of the electrode body portion 911.

Patent Document 1: Japanese Patent Application Laid-Open (JP-A) No. 2019-194949

### SUMMARY OF INVENTION

### Technical Problem

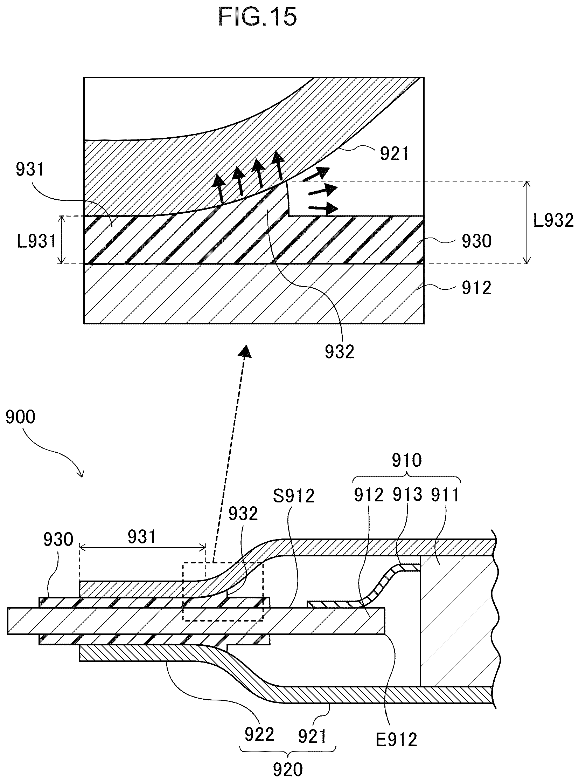

The welded portion 931 usually has an excess resin portion 932 further toward the side of the electrode body portion 911 than the welded portion 931 of the tab film 930. At the time when the welded portion 931 is formed by thermocompression bonding, the excess resin portion 932 is formed due to the molten material of the tab film 930 being pushed out toward the side of the electrode body portion 911. Thickness L932 (see Fig. 15) of the excess resin portion 932 is thicker than thickness T931 (see Fig. 15) of the welded portion 931.

There are cases in which the laminated battery 900 is exposed to high-temperature environments (e.g., around 90°C) at times of use. The excess resin portion 932 is formed on the main surface S912 of the terminal portion 912 that is harder than the laminate exterior body 920. Therefore, when the laminated battery is exposed to a high-temperature environment, there is the concern that it will be easy for the excess resin portion 932 to expand in the directions of the arrows in Fig. 15. In addition, the thermal expansion coefficient of the excess resin portion 932 is higher than the thermal expansion coefficient of the laminate exterior body 920. Therefore, at the time when the laminated battery is exposed to a high-temperature environment, the volume change in the excess resin portion 932 is greater than the volume change in the laminate exterior body 920. Namely, there is the concern that the laminate exterior body 920 will receive stress due to the volumetric expansion of the excess resin portion 932. As a result, there is the concern that breakage (e.g., tearing, bulging) of the laminate exterior body 920 (i.e., the laminate sheet) will occur. For this reason, a laminated battery in which it is difficult for the laminate sheet to break (in other words, that has excellent structural reliability of the laminate sheet) even when exposed to high-temperature environments is demanded.

The present disclosure was made in view of the above-described circumstances. A topic that embodiments of the present disclosure address is the provision of a laminated battery and a battery stack having excellent structural reliability of a laminate sheet even when exposed to high-temperature environments.
A topic that another embodiment of the present disclosure addresses is the provision of a method of manufacturing a laminated battery that can manufacture a laminated battery having excellent structural reliability of a laminate sheet even when exposed to high-temperature environments.

### Solution to Problem

The following embodying aspects are included among means for addressing the above-described topics.

<1> A laminated battery of a first aspect of the present disclosure is a laminated battery having: an electrode body; a side surface member disposed at a side surface of the electrode body; a laminate sheet covering the electrode body; and a tab film disposed between the side surface member and the laminate sheet, wherein: the side surface member and the laminate sheet are welded via the tab film, and the tab film has an inner excess resin portion projecting out from an end, which is at a side of the electrode body, of the side surface member.

In the first aspect, the tab film has the inner excess resin portion that projects out from the end, which is at the side of the electrode body, of the side surface member. In other words, the laminated battery has, in the thickness directions of the tab film, spaces at the sides of the inner excess resin portion which sides are opposite the laminate sheet sides thereof. Due thereto, at times when the laminated battery is exposed to high temperatures, it is easy for the inner excess resin portion to expand volumetrically toward the opposite side from the laminate sheet of the inner excess resin portion. Namely, the stress that the laminate sheet receives due to the volumetric expansion of the inner excess resin portion is mitigated more than conventionally. As a result, even if the laminated battery of the first aspect is exposed to a high-temperature environment, the structural reliability of the laminate sheet is excellent.

<2> A laminated battery of a first aspect of the present disclosure is the laminated battery of above <1>, wherein: the side surface member has a facing surface that faces the side surface of the electrode body, and, in a cross-section of the laminated battery that is cut along a direction orthogonal to the side surface of the electrode body, an angle formed by the facing surface of the side surface member, and a direction in which the laminate sheet extends toward a side of the electrode body from a specific region of the laminate sheet, is greater than or equal to 90°, and the specific region is a region of the laminate sheet that intersects an imaginary plane that includes the facing surface of the side surface member.

In the second aspect, the angle formed by the facing surface of the side surface member, and the direction in which the laminate sheet extends toward the side of the electrode body from a specific region of the laminate sheet, is greater than or equal to 90°. Due thereto, the surface area of the region of the inner excess resin portion, which region does not contact at least one of the side surface member and the laminate sheet, is greater than in a case in which the above-described angle is less than 90°. Therefore, at the time when the laminated battery is exposed to high temperatures, it is easier for the inner excess resin portion to expand volumetrically toward the side that is opposite side from the laminate sheet of the inner excess resin portion. Namely, the stress that the laminate sheet receives due to the volumetric expansion of the inner excess resin portion is mitigated more. As a result, even if the laminated battery of the second aspect is exposed to a high-temperature environment, the structural reliability of the laminate sheet is even better.

<3> A laminated battery of a third aspect of the present disclosure is the laminated battery of above <1> or <2>, wherein: the laminate sheet has a metal layer, and a resin layer layered on a surface of the metal layer at a side of the electrode body, and the side surface member has a facing surface that faces the side surface of the electrode body, and the inner excess resin portion has a covering portion that covers an end portion of the facing surface of the side surface member, and, in a cross-section of the laminated battery that is cut along a direction orthogonal to the side surface of the electrode body, a length, in a direction parallel to the facing surface of the side surface member, of the covering portion from an end at a side of the electrode body is greater than or equal to one-half of a thickness of the resin layer.

In the third aspect, the length, in a direction parallel to the facing surface of the side surface member, of the covering portion from the end at the side of the electrode body is greater than or equal to one-half of the thickness of the resin layer. Due thereto, as compared with a case in which the length of the covering portion is less than one-half of the thickness of the resin layer, owing to the existence of the covering portion of the inner excess resin portion, it is difficult for the facing surface of the side surface member and the laminate sheet to physically contact one another. Namely, the occurrence of short-circuiting is more reliably prevented. Moreover, it is difficult for the covering portion of the inner excess resin portion to peel away from the terminal. As a result, the stability and structural reliability of the laminated battery of the third aspect are even better.

<4> A laminated battery of a fourth aspect of the present disclosure is the laminated battery of any one of above <1> through <3>, wherein: the laminate sheet has a metal layer, and a resin layer layered on a surface of the metal layer, at a side of the electrode body, the side surface member has a facing surface that faces the side surface of the electrode body, the inner excess resin portion has a covering portions that covers an end portion of the facing surface, and, in a cross-section of the laminated battery that is cut along a direction orthogonal to the side surface of the electrode body, a length, in a direction parallel to the facing surface of the side surface member, of the covering portion from an end at a side of the electrode body is greater than or equal to one-fifth of a length, in a direction parallel to the facing surface of the side surface member, from the end at the side of the electrode body to the metal layer.

In the fourth aspect, the length, in a direction parallel to the facing surface of the side surface member, of the covering portion from the end at the side of the electrode body is greater than or equal to one-fifth of the length (hereinafter also called "first length"), in a direction parallel to the facing surface of the side surface member, from the end at the side of the electrode body to the metal layer. Due thereto, owing to the existence of the covering portion of the inner excess resin portion, it is more difficult for the facing surface of the side surface member and the laminate sheet to physically contact one another than in a case in which the length of the covering portion is less than one-fifth of the first length. Namely, the occurrence of short-circuiting is more reliably prevented. Moreover, it is difficult for the covering portion of the inner excess resin portion to peel away from the terminal. As a result, the stability and structural reliability of the laminated battery of the fourth aspect are even better.

<5> A laminated battery of a fifth aspect of the present disclosure is the laminated battery of any one of above <1> through <4>, wherein the end of the side surface member at the side of the electrode body is chamfered.

In the fifth aspect, the end at the side of the electrode body of the end portion is chamfered. Due thereto, the surface area of the region of the inner excess resin portion, which region does not contact at least one of the side surface member and the laminate sheet, is larger than in a case in which the end at the side of the electrode body of the end portion is not chamfered. Due thereto, at the time when the laminated battery is exposed to a high temperature, it is easier for the inner excess resin portion to expand volumetrically toward the opposite side from the laminate sheet of the inner excess resin portion. Namely, the stress that the laminate sheet receives due to the volumetric expansion of the inner excess resin portion is mitigated more. As a result, even if the laminated battery of the fifth aspect is exposed to a high-temperature environment, the structural reliability of the laminate sheet is even better.

<6> A laminated battery of a sixth aspect of the present disclosure is the laminated battery of any one of above <1> through <5>, wherein the tab film further has an outer excess resin portion that projects out from an end, at an opposite side from the electrode body, of the side surface member.

In the sixth aspect, the tab film further has the outer excess resin portion. Due thereto, in a case in which the laminated batteries are stacked, owing to the existence of the outer excess resin portion, it is difficult for the side surface member of one of the adjacent laminated batteries to physically contact the side surface member or the laminate sheet of another of the adjacent laminated batteries. Namely, the occurrence of short circuiting is prevented more reliably than in a case in which the tab film does not have the outer excess resin portion. As a result, the stability and structural reliability of the laminated battery of the sixth aspect are even better.

<7> A laminated battery of a seventh aspect of the present disclosure is the laminated battery of any one of above <1> through <6>, wherein the inner excess resin portion projects out from an entire periphery of the end of the side surface member at the side of the electrode body.

In the seventh aspect, the inner excess resin portion projects out from the entire periphery of the end of the side surface member at the side of the electrode body. Due thereto, at the time when the laminated battery is exposed to a high-temperature environment, it is easier for the inner excess resin portion to volumetrically expand toward the opposite side from the laminate sheet of the inner excess resin portion, than in a case in which the inner excess resin portion does not project out from the entire periphery of the end of the side surface member at the side of the electrode body. Namely, the stress that the laminate sheet receives due to volumetric expansion of the inner excess resin portion is mitigated more. As a result, even if the laminated battery of the seventh aspect is exposed to a high-temperature environment, the structural reliability of the laminate sheet is even better.

<8> A laminated battery of an eighth aspect of the present disclosure is the laminated battery of any one of above <1> through <7>, wherein: the electrode body has at least one unit electrode body, and the unit electrode body comprises a positive electrode collector, a positive electrode layer, an electrolyte layer, a negative electrode layer and a negative electrode collector, which are layered in this order.

In the eighth aspect, the unit electrode body comprises a positive electrode collector, a positive electrode layer, an electrolyte layer, a negative electrode layer and a negative electrode collector, which are layered in this order. As a result, the energy density of the laminated battery of the eight aspect is even better.

<9> A laminated battery of a ninth aspect of the present disclosure is the laminated battery of any one of above <1> through <8>, wherein: the side surface member is a terminal, and the terminals has a facing surface that faces the side surface of the electrode body, and the facing surface is electrically connected to the electrode body.

Conventionally, flat-plate-shaped terminals were used as terminals. At a flat-plate-shaped terminal, the side surface with respect to the main surface of the terminal was the facing surface, which faced the electrode body, of the terminal. The surface area of the side surface of the terminal is small. Therefore, the electrode body was electrically connected on the main surface of the terminal.
In the ninth aspect, the terminal has the facing surface that faces the side surface of the electrode body, and the facing surface is electrically connected to the electrode body. Due thereto, there is no need to sufficiently ensure the length in the direction orthogonal to the facing surface of the terminal (in other words, the length of the main surface in the direction orthogonal to the facing surface of the conventional, flat-plate-shaped terminal), in order to electrically connect the terminal and the electrode body. Namely, in the ninth aspect, the length in the direction orthogonal to the facing surface of the terminal can be made to be shorter than conventionally. As a result, the structural efficiency of the laminated battery of the ninth aspect is even better.

<10> A laminated battery of a tenth aspect of the present disclosure is the laminated battery of above <9>, comprising a pair of terminals facing one another via the electrode body.

<11> A battery stack of an eleventh aspect of the present disclosure is a battery stack having: a plurality of the laminated batteries of above <10> that are stacked along a direction parallel to the side surfaces of the electrode bodies; and a plurality of inter-battery connecting terminals electrically connected to the terminals and connecting the plurality of laminated batteries in series.

<12> A battery stack of a twelfth aspect of the present disclosure is the battery stack of above <11>, wherein: the plurality of laminated batteries include a first battery, and a second battery adjacent to the first battery, and the plurality of inter-battery connecting terminals include a first inter-battery connecting terminal electrically connecting the first battery and the second battery, and the first inter-battery connecting terminal has: a first terminal part electrically connected to one of the pair of terminals included in the first battery and a second terminal part electrically connected to one of the pair of terminals included in the second battery, and the first terminal part and the second terminal part are electrically connected.

In the twelfth aspect, the first inter-battery connecting terminal has the first terminal part and the second terminal part, and the first terminal part and the second terminal part are electrically connected. Due thereto, the mass producibility of the battery stack of the twelfth aspect is better than in a case in which the first inter-battery connecting terminal does not have the first terminal part and the second terminal part.

<13> A method of manufacturing a laminated battery of a thirteenth aspect of the present disclosure is a method of manufacturing a laminated battery having an electrode body, a side surface member disposed at a side surface of the electrode body, a laminate sheet covering the electrode body, and a tab film disposed between the side surface member and the laminate sheet, the method comprising a step of welding the side surface member and the laminate sheet via the tab film with a heat bar, and forming an inner excess resin portion that projects out from an end, which are a side of the electrode body, of the side surface member.

In accordance with the method of manufacturing a laminated battery of the thirteenth aspect, there is obtained a laminated battery in which the structural reliability of a laminate sheet is excellent even if exposed to a high-temperature environment.

<14> A method of manufacturing a laminated battery of a fourteenth aspect of the present disclosure is the method of manufacturing a laminated battery of above <13>, wherein: the heat bar has a planar portion facing the side surface member via the laminate sheet and the tab film at a time of welding the side surface member and the laminate sheet, and an inclined portion continuous with the planar portion and inclined toward an opposite side from the side surface member with respect to the planar portion, and the inclined portion includes a region that does not face the side surface member via the laminate sheet and the tab film at the time of welding the side surface member and the laminate sheet.

In a case in which a heat bar has the planar portion and does not have the inclined portion, at the time when the side surface member and the laminate sheet are welded, it is easy for a non-contacting specific portion of the laminate sheet to warp due to the difference in the linear expansion coefficient of the tab film and the linear expansion coefficient of the metal layer contained in the laminate sheet. The "non-contacting specific portion of the laminate sheet" is the region of the laminate sheet which region does not contact the heat bar, and is a region adjacent to a region of the laminate sheet which region contacts the heat bar. If the non-contacting specific portion of the laminate sheet warps, it is difficult for the inner excess resin portion that has the covering portion that covers the end portion of the facing surface, which faces the electrode body, of the side surface member to be formed. In the fourteenth aspect, the heat bar has the planar portion and the inclined portion. The inclined portion includes a region that does not face the side surface member via the laminate sheet and the tab film at the time of welding the side surface member and the laminate sheet. Due thereto, at the time of welding the side surface member and the laminate sheet, warping of the non-contacting specific portion of the laminate sheet is suppressed by the inclined portion of the heat bar. Due thereto, it is easy to form the inner excess resin portion that has the covering portion that covers the end portion of the facing surface, which faces the electrode body, of the side surface member. As a result, in the method of manufacturing a laminated battery of the fourteenth aspect of the present disclosure, a laminated battery whose stability and structural reliability are even better is obtained.

### Advantageous Effects of Invention

In accordance with the present disclosure, there are provided a laminated battery and a battery stack having excellent structural reliability of a laminate sheet even when exposed to high-temperature environments.
In accordance with the present disclosure, there is provided a method of manufacturing a laminated battery that can manufacture a laminated battery having excellent structural reliability of a laminate sheet even when exposed to high-temperature environments.

### BRIEF DESCRIPTION OF DRAWINGS

Fig. 1 is a perspective view illustrating the exterior of a laminated battery of a first embodiment of the present disclosure.
Fig. 2 is a cross-sectional view along line C2-C2 of the laminated battery of Fig. 1.
Fig. 3 is a partial, enlarged sectional view along line C2-C2 of the laminated battery of Fig. 1.
Fig. 4 is a partial, enlarged sectional view along line C4-C4 of the laminated battery of Fig. 1.
Fig. 5 is a schematic sectional view illustrating an example of a unit electrode body in the first embodiment of the present disclosure.
Fig. 6 is a graph illustrating welding strength of an end portion with respect to ratio (L4/L5) of thickness L5 of a resin layer and length L4 of a covering portion.
Fig. 7 is a graph illustrating welding strength of the end portion with respect to ratio (L4/L6) of length L6 of the resin layer and the length L4 of the covering portion.
Fig. 8 is a perspective view illustrating the exterior of a battery stack of the first embodiment of the present disclosure.
Fig. 9A is a drawing for explaining a method of manufacturing a laminated battery of the first embodiment of the present disclosure.
Fig. 9B is a drawing for explaining the method of manufacturing a laminated battery of the first embodiment of the present disclosure.
Fig. 9C is a drawing for explaining the method of manufacturing a laminated battery of the first embodiment of the present disclosure.
Fig. 10 is a drawing for explaining the method of manufacturing a laminated battery of the first embodiment of the present disclosure.
Fig. 11 is a drawing for explaining the method of manufacturing a laminated battery of the first embodiment of the present disclosure.
Fig. 12 is a cross-sectional view of a laminated battery of a second embodiment of the present disclosure.
Fig. 13 is a cross-sectional view of a laminated battery of a third embodiment of the present disclosure.
Fig. 14 is a perspective view illustrating the exterior of a battery stack of a fourth embodiment of the present disclosure.
Fig. 15 is a cross-sectional view of a conventional laminated battery.

### DESCRIPTION OF EMBODIMENTS

In the present disclosure, numerical ranges expressed by using "-" mean ranges in which the numerical values listed before and after the "-" are included as the minimum value and maximum value, respectively. In numerical value ranges that are expressed in a stepwise manner in the present disclosure, the upper limit value or the lower limit value listed in a given numerical value range may be substituted by the upper limit value or the lower limit value of another numerical value range that is expressed in a stepwise manner. In the present disclosure, combinations of two or more preferable aspects are more preferable aspects. In the present disclosure, "step" is not only an independent step and includes steps that, even in a case in which that step cannot be clearly distinguished from another step, achieve the intended object of that step.

Embodiments of the laminated battery, the battery stack, and the method of manufacturing a laminated battery of the present disclosure are described hereinafter with reference to the drawings. In the drawings, same or corresponding portions are denoted by the same reference numerals, and description thereof is not repeated.

### (1) Laminated Battery

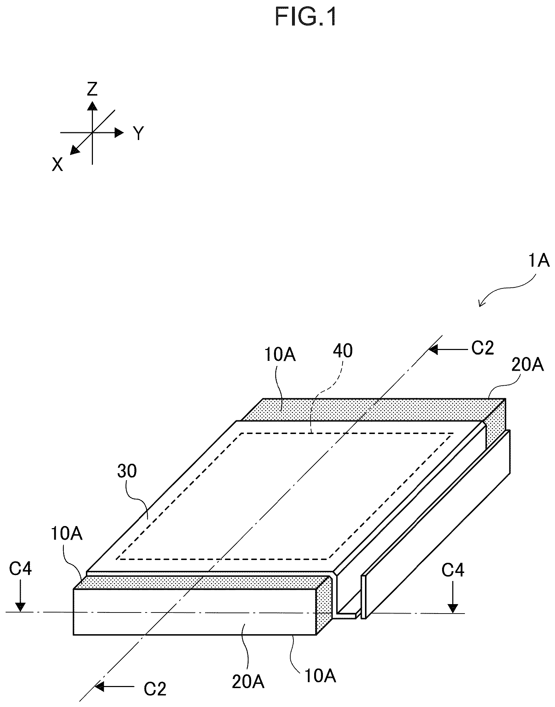

As illustrated in Fig. 1, laminated battery 1A relating to a first embodiment of the present disclosure has tab films 10A, a pair of terminals 20A that are an example of the side surface member, a laminate sheet 30, and an electrode body 40. One of the pair of terminals 20A is a positive electrode terminal. The another of the pair of terminals 20A is a negative electrode terminal. The electrode body 40 is a rectangular parallelopiped object.

In the first embodiment, one side in the longitudinal direction of the main surface of the electrode body 40 is defined as the X-axis positive direction (also called "front side" hereinafter), and the opposite side thereto is defined as the X-axis negative direction (also called "rear side" hereinafter). One side in the short-side direction of the main surface of the electrode body 40 is defined as the Y-axis positive direction (also called "right side" hereinafter), and the opposite side thereto is defined as the Y-axis negative direction (also called "left side" hereinafter). One side in the thickness direction of the electrode body 40 is defined as the Z-axis positive direction (also called "upper side" hereinafter), and the opposite side thereto is defined as the Z-axis negative direction (also called "lower side" hereinafter). The X-axis, Y-axis and Z-axis respectively are orthogonal to one another. Note that these directions do not limit the directions at the time when the laminated battery 1A of the present disclosure is used.

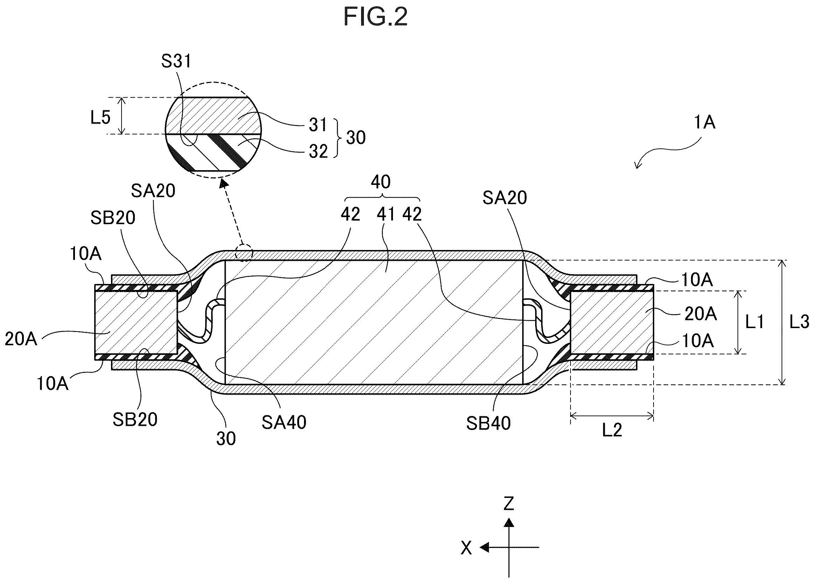

As illustrated in Fig. 2, the pair of terminals 20A are disposed so as to face one another via the electrode body 40. In detail, one of the pair of terminals 20A is disposed at front surface SA40 of the electrode body 40. The another of the pair of terminals 20A is disposed at rear surface SB40 of the electrode body 40. Each of the pair of terminals 20A is electrically connected to the electrode body 40. The laminate sheet 30 covers the electrode body 40. The tab film 10A is disposed between the terminals 20A and the laminate sheet 30. The pair of terminals 20A respectively and the laminate sheet 30 are welded via the tab film 10A. The electrode body 40 is sealed by the pair of terminals 20A and the laminate sheet 30.

In the first embodiment, the laminated battery 1A is a laminated lithium secondary battery that uses a solid electrolyte. Examples of applications of the laminated battery 1A are use as a power source that is installed in a vehicle, a power source for an information processing device (e.g., a personal computer, a smartphone), and a power source for electrical storage.

### (1.1) Terminals

The terminals 20A are rectangular parallelopiped objects whose longitudinal direction is the left-right direction (the Y-axis direction) and whose short-side direction is the front-rear direction (the X-axis direction).

One of the pair of terminals 20A has a facing surface SA20 that faces the front surface SA40 of the electrode body 40. The another of the pair of terminals 20A has the facing surface SA20 that faces the rear surface SB40 of the electrode body 40. The respective facing surfaces SA20 of the pair of terminals 20A are electrically connected to the electrode body 40. Length L1 (see Fig. 2) in the vertical direction (the Z-axis direction) of the respective facing surfaces SA20 of the pair of terminals 20A is longer than that of a conventional terminal. The length L1 is, for example, greater than or equal to 0.1 cm. Length L2 (see Fig. 2) in the front-rear direction (the X-axis direction) of each of the pair of terminals 20A is shorter than that of a conventional terminal. The length L2 is, for example, less than or equal to 2.0 cm.
Examples of the material of the terminals 20A are metals (e.g., stainless steel (SUS)).

### (1.2) Tab Film

The tab film 10A function to electrically insulate the laminate sheet 30 and the terminals 20A, and function to join the laminate sheet 30 and the terminals 20A.

The tab film 10A is disposed at the entire surfaces of all of side surfaces SB20 with respect to the facing surface SA20 of the pair of terminals 20A.

The tab film 10A is formed from a first thermoplastic resin composition. The first thermoplastic resin composition contains a first thermoplastic resin. Examples of the first thermoplastic resin are olefin resins (e.g., polypropylene and polyethylene), polyvinyl chloride, polyvinylidene chloride, polystyrene resins, acrylonitrile-styrene copolymer (AS) resin, acrylonitrile-butadiene-styrene copolymer (ABS) resin, polyester resins, poly(meth)acrylate resins, polyvinyl alcohol, polycarbonate resins, polyamide resins, polyimide resins, polyether resins, polyacetal resins, fluorine resins, polysulfone resins, polyphenylene sulfide resin and polyketone resins. Thereamong, from the standpoint of improving the adhesion with the terminals 20A, it is preferable that the first thermoplastic resin contains acid-modified polypropylene. The first thermoplastic resin composition may contain compounding agents as needed. Examples of compounding agents are heat stabilizers, oxidation inhibitors, pigments, weatherproofing agents, flame retardants, plasticizers, dispersants, lubricants, mold releasing agents, and antistatic agents.

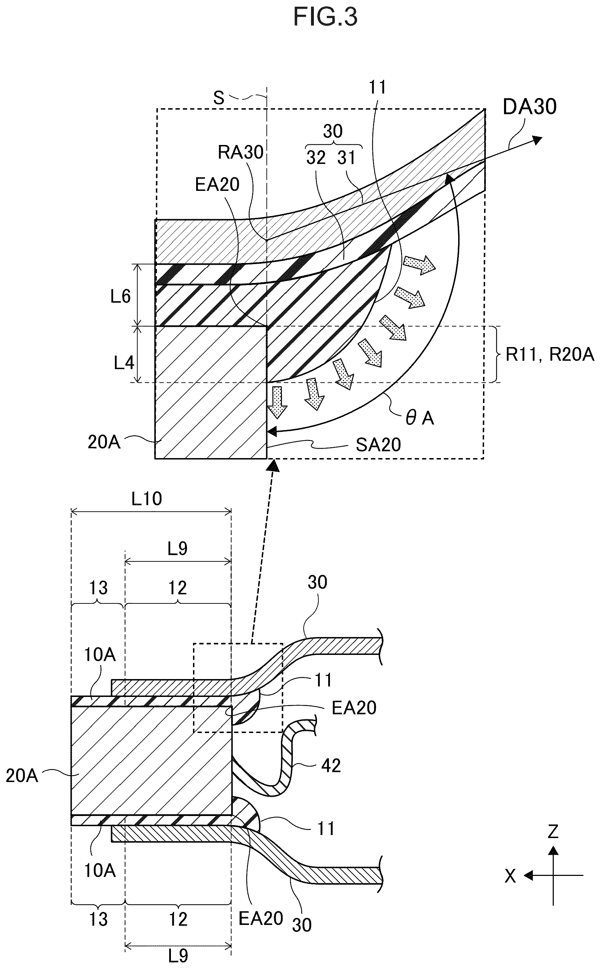

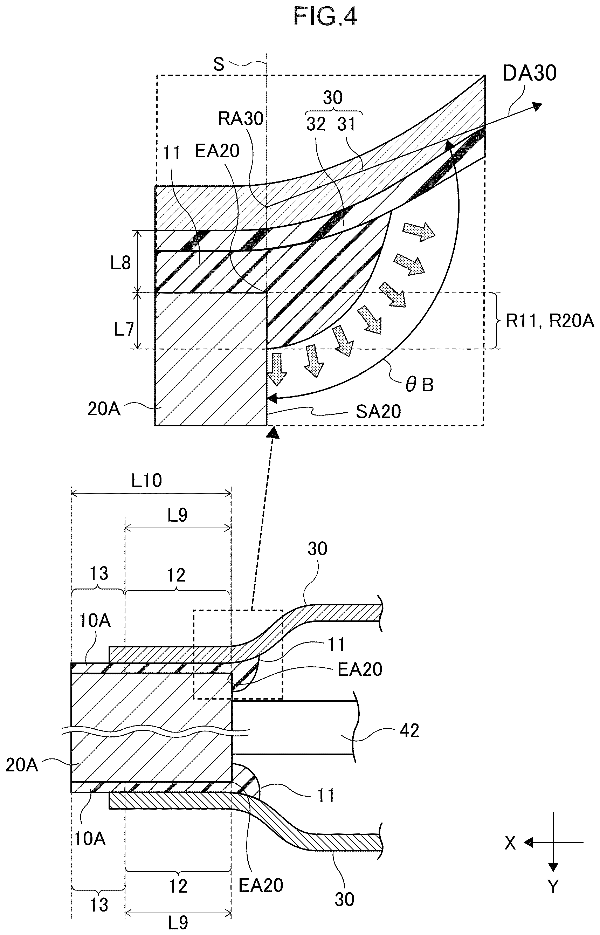

Details of the shape of the tab film 10A is described later with reference to Fig. 3 and Fig. 4.

### (1.3) Laminate Sheet

The laminate sheet 30 covers the electrode body 40 and, together with the pair of terminals 20A, seals the electrode body 40. A single laminate sheet is used as the laminate sheet 30. This one laminate sheet 30 is folded-over and functions as a laminate exterior material.

The laminate sheet 30 has a metal layer 31 and a resin layer 32. The resin layer 32 is layered on surface S31 that is at the electrode body 40 side of the metal layer 31.

The metal layer 31 blocks the entry and exit of gasses (e.g., moisture and air) between the exterior of the laminated battery 1A and the interior of the laminated battery 1A. The material of the metal layer 31 is a metal (e.g., aluminum).

The resin layer 32 electrically insulates the pair of terminals 20A and the electrode body 40, and the metal layer 31. The resin layer 32 is formed of a second thermoplastic resin composition. The second thermoplastic resin composition contains a second thermoplastic resin. The second thermoplastic resin is not particularly limited, and examples thereof are the similar to those exemplified as the first thermoplastic resin. Thereamong, it is preferable that the second thermoplastic resin include a resin that is compatible with the first thermoplastic resin. Due thereto, the tab film 10A and the resin layer 32 are welded. "That is compatible" means that the first thermoplastic resin and the second thermoplastic resin can mix together without separating, in an environment in which the first thermoplastic resin and the second thermoplastic resin melt. A resin that is compatible with the first thermoplastic resin is appropriately selected in accordance with the type of the first thermoplastic resin. In a case in which the first thermoplastic resin includes acid-modified polypropylene, it is preferable that the second thermoplastic resin includes a non-modified polypropylene. Acid-modified polypropylene has excellent metal adhesion. Non-modified polypropylene has poor metal adhesion. Therefore, in a case in which the first thermoplastic resin includes acid-modified polypropylene and the second thermoplastic resin includes non-modified polypropylene, the tab film 10A and the resin layer 32 are welded, and the occurrence of welding of the resin layer 32 and the electrode body 40 is prevented. The second thermoplastic resin composition may contain a compounding agent as needed. Examples of the compounding agents are similar to those exemplified as the compounding agents of the first thermoplastic resin composition.

### (1.4) Electrode Body

The electrode body 40 functions as the power generating element of the laminated battery 1A.

The electrode body 40 has plural unit electrode bodies 41 and a pair of collector tabs 42. One of the pair of collector tabs 42 is a positive electrode collector tab and is electrically connected to the positive electrode terminal. The another of the pair of collector tabs 42 is a negative electrode collector tab and is electrically connected to the negative electrode terminal. Each of the pair of collector tabs 42 is electrically connected to the plural unit electrode bodies 41.

The plural unit electrode bodies 41 are rectangular parallelopiped objects. In the first embodiment, length L3 (see Fig. 2) of the plural unit electrode bodies 41 in the vertical direction (the Z-axis direction) is longer than the length L1 (see Fig. 2) of the respective facing surfaces SA20 of the pair of terminals 20A in the vertical direction (the Z-axis direction).

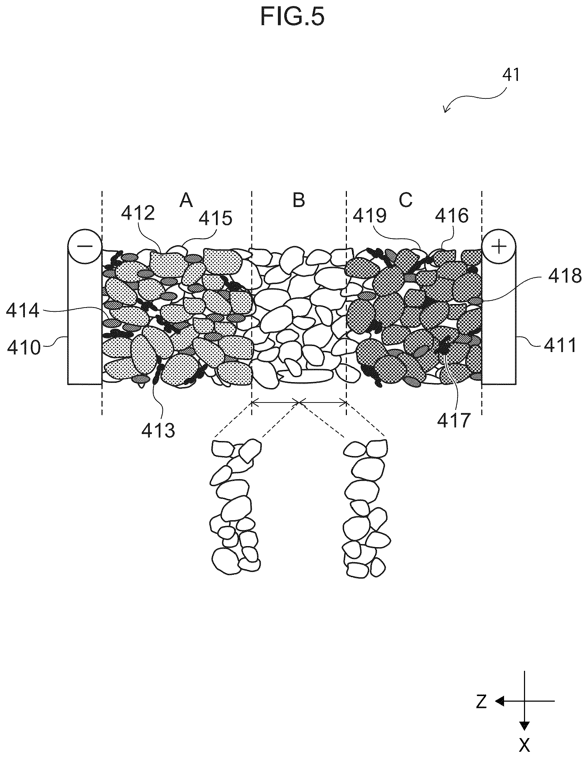

Details of the battery structure of the electrode body 40 are described later with reference to Fig. 5.

### (1.5) Shape of Tab Film

As illustrated in Fig. 3 and Fig. 4, the tab film 10 has an inner excess resin portion 11, a thermocompression bonded portion 12, and a non thermocompression bonded portion 13. The inner excess resin portion 11 projects-out from the entire periphery of end EA20 that is at the side of the electrode body 40 of the terminal 20A. The inner excess resin portion 11 is not nipped between the terminal 20A and the laminate sheet 30. The thermocompression bonded portion 12 and the non thermocompression bonded portion 13 are nipped between the terminal 20A and the laminate sheet 30. The thermocompression bonded portion 12 is positioned between the M inner excess resin portion 11 and the non thermocompression bonded portion 13. The inner excess resin portion 11, the thermocompression bonded portion 12 and the non thermocompression bonded portion 13 are integral.

### (1.5.1) Inner Excess Resin Portion

The inner excess resin portion 11 projects-out from the end EA20 at the side of the electrode body 40 of the terminal 20A toward the side of the electrode body 40. The inner excess resin portion 11 is formed by, for example, the molten material of the tab film 10A being pushed out from the end EA20 at the side of the electrode body 40 of the terminal 20A at the time when the thermocompression bonded portion 12 is formed by thermocompression bonding. The inner excess resin portion 11 may be welded to the laminate sheet 30 (specifically, the resin layer 32).

As illustrated in Fig. 3, in a cross-section of the laminated battery 1A that is cut along the longitudinal direction (the X-axis direction) that is orthogonal to the front surface SA40 of the electrode body 40, first angle θA is greater than or equal to 90°. The first angle θA is the angle formed by the facing surface SA20 of the terminal 20A and direction DA30 in which the laminate sheet 30 extends from a specific region RA30 of the laminate sheet 30 toward the side of the electrode body 40 (e.g., the X-axis negative direction). The specific region RA30 is the region of the laminate sheet 30 that intersects imaginary plane S that includes the facing surface SA20 of the terminal 20A.
The first angle θA is preferably 90° - 150°, and is more preferably 100° - 135°.

As illustrated in Fig. 3, the inner excess resin portion 11 has a covering portion R11 that covers an end portion R20A of the facing surface SA20 of the terminal 20A. In a cross-section of the laminated battery 1A that is cut along the longitudinal direction (the X-axis direction) that is orthogonal to the front surface SA40 of the electrode body 40, a length L4 (see Fig. 3), in the vertical direction (the Z-axis direction) that is parallel to the facing surface SA20 of the terminal 20A, of the covering portion R11 from the end EA20 at the side of the electrode body 40 is greater than or equal to one-half of the thickness L5 (see Fig. 2) of the resin layer 32.

The length L4 of the covering portion R11 is preferably greater than or equal to one-half of, and more preferably greater than or equal to three-quarters of, the thickness L5 of the resin layer 32.

As illustrated in Fig. 3, in a cross-section of the laminated battery 1A that is cut along the longitudinal direction (the X-axis direction) that is orthogonal to the front surface SA40 of the electrode body 40, the length L4 (see Fig. 3), in the longitudinal direction (the X-axis direction) that is parallel to the facing surface SA20 of the terminal 20A, of the covering portion R11 from the end EA20 at the side of the electrode body 40 is greater than or equal to one-fifth of length L6 (see Fig. 3), in the vertical direction (the Z-axis direction) that is parallel to the facing surface SA20 of the terminal 20A, from the end EA20 at the side of the electrode body 40 to the metal layer 31.
The length L4 of the covering portion R11 is preferably greater than or equal to one-fifth, and more preferably greater than or equal to two-fifths, the length L6.

As illustrated in Fig. 4, in a cross-section of the laminated battery 1A that is cut along the left-right direction (the Y-axis direction) that is orthogonal to the front surface SA40 of the electrode body 40, second angle θB is greater than or equal to 90°. The second angle θB is the angle formed by the facing surface SA20 of the terminal 20A and direction DB30 in which the laminate sheet 30 extends from the specific region RA30 of the laminate sheet 30 toward the side of the electrode body 40 (e.g., the X-axis negative direction). The specific region RA30 is the region of the laminate sheet 30 that intersects the imaginary plane S that includes the facing surface SA20 of the terminal 20A.
The second angle θB is preferably 90° - 150°, and is more preferably 100° - 135°.

As illustrated in Fig. 4, in a cross-section of the laminated battery 1A that is cut along the left-right direction (the Y-axis direction) that is orthogonal to the front surface SA40 of the electrode body 40, length L7 (see Fig. 4), in the left-right direction (the Y-axis direction) that is parallel to the facing surface SA20 of the terminal 20A, of the covering portion R11 from the end EA20 at the side of the electrode body 40 is greater than or equal to one-half of the thickness L5 (see Fig. 2) of the resin layer 32.
The length L7 of the covering portion R11 is preferably greater than or equal to one-half, and more preferably greater than or equal to three-quarters, the thickness L5 of the resin layer 32. The length L7 of the covering portion R11 may be the same as or may be different than the length L4 (see Fig. 3) of the covering portion R11.

As illustrated in Fig. 4, in a cross-section of the laminated battery 1A that is cut along the left-right direction (the Y-axis direction) that is orthogonal to the front surface SA40 of the electrode body 40, the length L7 (see Fig. 4), in the left-right direction (the Y-axis direction) that is parallel to the facing surface SA20 of the terminal 20A, of the covering portion R11 from the end EA20 at the side of the electrode body 40 is greater than or equal to one-fifth of length L8 (see Fig. 4), in the left-right direction (the Y-axis direction) that is parallel to the facing surface SA20 of the terminal 20A, from the end EA20 at the side of the electrode body 40 to the metal layer 31.
The length L7 of the covering portion R11 is preferably greater than or equal to one-fifth, and more preferably greater than or equal to two-fifths, the length L8. The length L8 may be the same as or may be different than the length L6 (see Fig. 3).

### (1.5.2) Thermocompression Bonded Portion

The thermocompression bonded portion 12 is the region that is directly thermocompression bonded via the laminate sheet 30 by a heating tool (e.g., a heat bar). The thermocompression bonded portion 12 is welded to the terminal 20A and the laminate sheet 30 (specifically, the resin layer 32). Length L9 (see Fig. 3 and Fig. 4) of the thermocompression bonded portion 12 in the longitudinal direction (the X-axis direction) is preferably within 15 mm, and more preferably 3 mm - 10 mm. In the first embodiment, in the longitudinal direction (the X-axis direction), the position of the X-axis negative direction end portion of the thermocompression bonded portion 12, and the position of the end EA20 at the side of the electrode body 40 of the terminal 20A, are the same.

### (1.5.3) Non Thermocompression Bonded Portion

The non thermocompression bonded portion 13 is the region that is not directly thermocompression bonded via the laminate sheet 30 by a heating tool (e.g., a heat bar). The region of the non thermocompression bonded portion 13, which region is nipped between the terminal 20A and the laminate sheet 30, is welded to the terminal 20A and the laminate sheet 30 (specifically, the resin layer 32). The region of the non thermocompression bonded portion 13, which region is not nipped between the terminal 20A and the laminate sheet 30, is welded to the terminal 20A.

### (1.6) Battery Structure

The unit electrode bodies 41 include so-called all-solid-state batteries that use an inorganic solid electrolyte as the electrolyte (the content of electrolyte liquid that is used as the electrolyte is less than 5 mass% with respect to the total amount of the electrolyte).

The structure of the unit electrode body 41 may be a structure in which a positive electrode collector, a positive electrode layer, a solid electrolyte layer, a negative electrode layer, and a negative electrode collector are layered in that order along the vertical direction (the Z-axis direction), e.g., may be the structure illustrated in Fig. 5. Solid electrolyte layer B in Fig. 5 may be a two-layer structure. Fig. 5 is a schematic sectional view illustrating an example of the unit electrode body 41. The unit electrode body 41 illustrated in Fig. 5 has a negative electrode including a negative electrode collector 410 and a negative electrode layer A, the solid electrolyte layer B, and a positive electrode including a positive electrode collector 411 and a positive electrode layer C. The negative electrode layer A contains negative electrode active material 412, conduction assistant 413, binder 414 and solid electrolyte 415. The positive electrode layer C contains positive electrode active material 416, conduction assistant 417, binder 418 and solid electrolyte 419.

The plural unit electrode bodies 41 may be connected in series or may be connected in parallel.

The plural unit electrode bodies 41 may be structured such that the layer end surface (the side surface) of a layered structure of a positive electrode layer / a solid electrolyte layer / a negative electrode layer are sealed by a resin.

### (1.6.1) Solid Electrolyte Layer

The unit electrode body 41 has a solid electrolyte layer. The solid electrolyte layer preferably contains at least one selected from the group consisting of sulfide solid electrolytes, oxide solid electrolytes, and halide solid electrolytes.

The sulfide solid electrolyte preferably contains sulfur (S) as the main component that is an anion element, and further, preferably contains, for example, the element Li and element A. Element A is at least one type selected from the group consisting of P, As, Sb, Si, Ge, Sn, B, Al, Ga and In. The sulfide solid electrolyte may further contain at least one of O and a halogen element. Examples of the halogen element (X) are F, Cl, Br and I. The composition of the sulfide solid electrolyte is not particularly limited, and examples are xLi₂S·(100-x)P₂S₅ (70≤x≤80) and yLiI·zLiBr·(100-y-z)(xLi₂S·(1-x)P₂S₅) (0.7≤x≤0.8, 0≤y≤30, 0≤z≤30). The sulfide solid electrolyte may have the composition expressed by following general formula (1).

formula (1): Li₄₋ₓGe₁₋ₓPₓS₄ (0<x<1)

In formula (1), at least some of the Ge may be substituted by at least one selected from the group consisting of Sb, Si, Sn, B, Al, Ga, In, Ti, Zr, V and Nb. Further, at least some of the P may be substituted by at least one selected from the group consisting of Sb, Si, Sn, B, Al, Ga, In, Ti, Zr, V and Nb. Some of the Li may be substituted by at least one selected from the group consisting of Na, K, Mg, Ca and Zn. Some of the S may be substituted by a halogen. The halogen is at least one of F, Cl, Br and I.

The oxide solid electrolyte preferably contains oxygen (O) as the main component that is an anion element, and, for example, may contain Li, element Q (Q represents at least one of Nb, B, Al, Si, P, Ti, Zr, Mo, W and S), and O. Examples of the oxide solid electrolyte are garnet type solid electrolytes, perovskite type solid electrolytes, NASICON type solid electrolytes, Li-P-O solid electrolytes, and Li-B-O solid electrolytes. Examples of garnet type solid electrolytes are Li₇La₃Zr₂O₁₂, Li₇₋ₓLa₃(Zr₂₋ₓNbₓ)O₁₂ (0≤x≤2), and Li₅La₃Nb₂O₁₂. Examples of perovskite type solid electrolytes are (Li,La)TiO₃, (Li,La)NbO₃, and (Li,Sr)(Ta,Zr)O₃. Examples of NASICON type solid electrolytes are Li(Al,Ti)(PO₄)₃ and Li(Al,Ga)(PO₄)₃. Examples of Li-P-O solid electrolytes are Li₃PO₄ and LIPON (compounds in which some of the O in Li₃PO₄ is substituted with N). Examples of Li-B-O solid electrolytes are Li₃BO₃, and compounds in which some of the O in Li₃BO₃ is substituted with C.

As the halide solid electrolyte, solid electrolytes containing Li, M and X (M represents at least one of Ti, Al and Y, and X represents F, Cl or Br) are suitable. Specifically, Li_{6-3z}Y_{z}X₆ (X represents Cl or Br, and z satisfies 0<z<2) and Li_{6-(4-x)b}(Ti₁₋ₓAlₓ)_{b}F₆ (0<x<1, 0<b≤1.5) are preferable. Among Li_{6-3z}Y_{z}X₆, from the standpoint of having excellent lithium ion conductivity, Li₃YX₆ (X represents Cl or Br) is more preferable, and Li₃YCl₆ is even more preferable. Further, from standpoints such as, for example, suppressing oxidative decomposition of the sulfide solid electrolyte, it is preferable that Li_{6-(4-x)b}(Ti₁₋ₓAlₓ)_{b}F₆ (0<x<1, 0<b≤1.5) be contained together with a solid electrolyte such as a sulfide solid electrolyte.

The solid electrolyte layer may be a single-layer structure, or may be a multilayer structure of two or more layers.

The solid electrolyte layer may contain a binder, or may not contain a binder. Examples of binders that can be contained in the solid electrolyte layer are vinyl halide resins, rubbers and polyolefin resins. Examples of vinyl halide resins are polyvinylidene fluoride (PVdF), and the copolymer (PVdF-HFP) of polyvinylidene fluoride and hexafluoropropylene. Examples of polyolefin resins are butadiene rubber (BR), acrylate-butadiene rubber (ABR), styrene-butadiene rubber (SBR), acrylonitrile-butadiene rubber (NBR), and butyl rubber (isobutylene-isoprene rubber). Examples of polyolefin resins are polyethylene and polypropylene. Binder (C) may be a diene rubber containing a double bond in the main chain, e.g., butadiene rubber in which 30 mol% or more of the entire amount is butadiene.

### (1.6.2) Positive Electrode Layer

The unit electrode body 41 has a positive electrode layer. The positive electrode layer contains a positive electrode active material. As needed, the positive electrode layer may contain at least one of a solid electrolyte for a positive electrode, a conduction assistant and a binder.

It is preferable that a lithium composite oxide be contained as the positive electrode active material. The lithium composite oxide may contain at least one type selected from the group consisting of F, Cl, N, S, Br and I. Further, the lithium composite oxide may have a crystal structure belonging to at least one space group selected from space groups R-3m, Immm, and P63-mmc (also called P63mc, P6/mmc). In the lithium composite oxide, the main sequence of a transition metal, oxygen and lithium may be an O2-type structure.

Examples of lithium composite oxides having a crystal structure belonging to R-3m are compounds expressed by LiₓMe_{y}O_{α}X_{β} (Me represents at least one type selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si and P, and X represents at least one type selected from the group consisting of F, Cl, N, S, Br and I, and 0.5≤x≤1.5, 0.5≤y≤1.0, 1≤α<2, and 0<β≤1 are satisfied).

Examples of lithium composite oxides having a crystal structure belonging to Immm are composite oxides expressed by Liₓ₁M¹A¹₂ (1.5≤x1≤2.3is satisfied, M¹ includes at least one type selected from the group consisting of Ni, Co, Mn, Cu and Fe, A¹ includes at least oxygen, and the ratio of the oxygen contained in A¹ is greater than or equal to 85 atom%) (a specific example is Li₂NiO₂), and composite oxides expressed by Liₓ₁M^{1A}₁₋ₓ₂M^{1B}ₓ₂O_{2-y}A²_{y} (0≤x2≤0.5, 0≤y≤0.3, at least one of x2 and y is not 0, M^{1A} represents at least one type selected from the group consisting of Ni, Co, Mn, Cu and Fe, M^{1B} represents at least one type selected from the group consisting of Al, Mg, Sc, Ti, Cr, V, Zn, Ga, Zr, Mo, Nb, Ta and W, and A2 represents at least one type selected from the group consisting of F, Cl, Br, S and P).

Examples of lithium composite oxides having a crystal structure belonging to P63-mmc are composite oxides expressed by M1ₓM2_{y}O₂ (M1 represents an alkali metal (at least one of Na and K is preferable), M2 represents a transition metal (at least one type selected from the group consisting of Mn, Ni, Co and Fe is preferable), and x+y satisfies 0<x+y≤2).

Examples of lithium composite oxides having an O2-type structure are composite oxides expressed by Liₓ[Li_{α}(MnₐCo_{b}M_{c})_{1-α}]O₂ (0.5<x<1.1, 0.1<α<0.33, 0.17<a<0.93, 0.03<b<0.50, 0.04<c<0.33, and M represents at least one type selected from the group consisting of Ni, Mg, Ti, Fe, Sn, Zr, Nb, Mo, W and Bi). A specific example is Li_{0.744}[Li_{0.145}Mn_{0.625}C0_{0.115}Ni_{0.115}]O₂.

The solid electrolyte for a positive electrode preferably contains one selected from the group consisting of sulfide solid electrolytes, oxide solid electrolytes and halide solid electrolytes. Examples of the sulfide solid electrolytes are similar to those exemplified as the sulfide solid electrolytes that are contained in the solid electrolyte. Examples of the oxide solid electrolytes are similar to those exemplified as the oxide solid electrolytes that are contained in the solid electrolyte. Examples of the halide solid electrolytes are similar to those exemplified as the halide solid electrolytes that are contained in the solid electrolyte.

Examples of the conduction assistant are carbon materials, metal materials, and conductive polymer materials. Examples of the carbon materials are carbon black (e.g., acetylene black, furnace black and ketjen black), filamentous carbon (e.g., vapor grown carbon fibers, carbon nanotubes and carbon nanofibers), graphite and fluorocarbons. Examples of the metal materials are metal powders (e.g., aluminum powder), conductive whiskers (e.g., zinc oxide and potassium titanate) and conductive metal oxides (e.g., titanium oxide). Examples of the conductive polymer materials are polyaniline, polypyrrole and polythiophene. One type of conduction assistant may be used alone, or two or more types may be used by being mixed together.

Examples of the binder are similar to those exemplified as binders that are contained in the solid electrolyte layer.

### (1.6.3) Positive Electrode Collector

The unit electrode body 41 has a positive electrode collector. The positive electrode collector carries out power collection of the positive electrode layer. The positive electrode collector is disposed at a position at the side of the positive electrode layer, which side is opposite the side at which the solid electrolyte layer is located.

Examples of the positive electrode collector are stainless steel, aluminum, copper, nickel, iron, titanium and carbon, and an aluminum alloy foil or an aluminum foil is preferable. The aluminum alloy foil or aluminum foil may be manufactured by using a powder. Examples of the form of the positive electrode collector are the form of a foil and the form of a mesh. The positive electrode collector may be a structure in which a shock-absorbing layer, an elastic layer or a PTC (Positive Temperature Coefficient) thermistor layer is disposed on the surface.

### (1.6.4) Negative Electrode Layer

The unit electrode body 41 has a negative electrode layer. The negative electrode layer contains a negative electrode active material. The negative electrode layer may, as needed, contain at least one of a solid electrolyte for a negative electrode, a conduction assistant, and a binder. Examples of the negative electrode active material are Li-based active materials such as metallic lithium, carbon-based active materials such as graphite, oxide-based active materials such as lithium titanate, and Si-based active materials such as elemental Si. Examples of the conduction assistant, the solid electrolyte for a negative electrode, and the binder that are used in the negative electrode layer are similar to those exemplified as the conduction assistant contained in the positive electrode layer, the solid electrolyte contained in the solid electrolyte layer, and the binder (C).

### (1.6.5) Negative Electrode Collector

The unit electrode body 41 has a negative electrode collector. The negative electrode collector carries out power collection of the negative electrode layer. The negative electrode collector is disposed at a position at the side of the negative electrode layer, which side is opposite the side at which the solid electrolyte layer is located.

Examples of the negative electrode collector are stainless steel, aluminum, copper, nickel, iron, titanium and carbon, and copper is preferable. Examples of the form of the negative electrode collector are the form of a foil and the form of a mesh.

The negative electrode collector may be a structure in which a shock-absorbing layer, an elastic layer or a PTC (Positive Temperature Coefficient) thermistor layer is disposed on the surface.

### (1.7) Operation and Effects

As illustrated in Fig. 1 through Fig. 5, the laminated battery 1A has the electrode body 40, the pair of terminals 20A, the laminate sheet 30 and the tab film 10A. The pair of terminals 20A and the laminate sheet 30 are welded via the tab film 10A. The tab film 10A has the inner excess resin portion 11 that projects out from the end EA20 , which is at the side of the electrode body 40, of the terminal 20A.

In the thickness direction of the tab film 10A (the Z-axis direction or the Y-axis direction), the laminated battery 1A has a space at the side of the inner excess resin portion 11 which side is opposite side from the laminate sheet 30 thereof. Due thereto, at times when the laminated battery 1A is exposed to high temperatures, it is easy for the inner excess resin portion 11 to expand volumetrically toward the side thereof opposite the laminate sheet 30 (i.e., in the directions of the arrows in Fig. 3 and Fig. 4). Namely, the stress that the laminate sheet 30 receives due to the volumetric expansion of the inner excess resin portion 11 is mitigated more than conventionally. As a result, the structural reliability of the laminate sheet 30 is excellent even if the laminated battery 1A is exposed to a high-temperature environment.

As described with reference to Fig. 1 through Fig. 5, at the laminated battery 1A, the first angle θA and the second angle θB respectively are greater than or equal to 90°. Due thereto, the surface area of the region of the inner excess resin portion 11, which region does not contact at least one of the terminal 20A and the laminate sheet 30, is greater than in a case in which the first angle θA and the second angle θB respectively are less than 90°. Due thereto, at the time when the laminated battery 1A is exposed to high temperatures, it is easy for the inner excess resin portion 11 to expand volumetrically toward the side of the inner excess resin portion 11 that is opposite side from the laminate sheet 30. Namely, the stress that the laminate sheet 30 receives due to the volumetric expansion of the inner excess resin portion 11 is mitigated more. As a result, even if the laminated battery 1A is exposed to a high-temperature environment, the structural reliability of the laminate sheet 30 is even better.

As described with reference to Fig. 1 through Fig. 5, at the laminated battery 1A, the length L4 (see Fig. 3), in the vertical direction (the Z-axis direction) that is parallel to the facing surface SA20 of the terminal 20A, of the covering portion R11 from the end EA20 at the side of the electrode body 40 is greater than or equal to one-half of the thickness L5 (see Fig. 2) of the resin layer 32. The length L7 (see Fig. 4) of the covering portion R11 from the end EA20 at the side of the electrode body 40 is greater than or equal to one-half of the thickness L5 (see Fig. 2) of the resin layer 32.
Due thereto, owing to the existence of the covering portion R11, it is difficult for the facing surface SA20 of the terminal 20A and the laminate sheet 30 to physically contact one another. Namely, the occurrence of short-circuiting is more reliably prevented. Moreover, it is difficult for the covering portion of the inner excess resin portion to peel away from the terminal. As a result, the stability and structural reliability of the laminated battery 1A are even better.

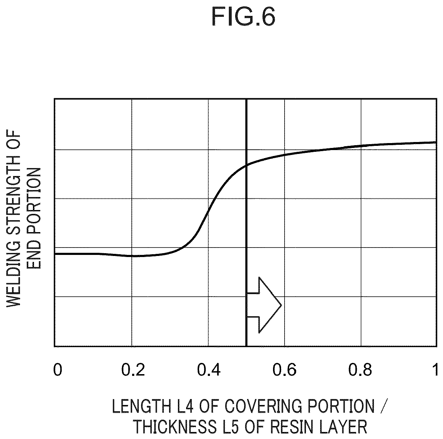

The relationship between the length L4 (see Fig. 3) of the covering portion R11 of the inner excess resin portion 11 and the thickness L5 (see Fig. 2) of the resin layer 32 of the laminate sheet 30 is described hereinafter with reference to Fig. 6.
Fig. 6 illustrates measured data of the welding strength of the end portion (including the end EA20) of the terminal 20A with respect to ratio (L4/L5) at the time when the tab film 10A contains acid-modified polypropylene and the resin layer 32 of the laminate sheet 30 contains non-modified polypropylene. The length L4 (see Fig. 3) and the length L7 (see Fig. 4) are the same.
As illustrated in Fig. 6, the welding strength of the end portion depends on the ratio (L4/L5). It can be understood that the welding strength of the end portion in cases in which the ratio (L4/L5) is greater than or equal to 0.5 is greatly improved over the welding strength of the end portion in cases in which the ratio (L4/L5) is less than 0.5. As a result, it can be understood empirically that, if the length L4 (see Fig. 3) of the covering portion R11 of the inner excess resin portion 11 is greater than or equal to one-half of the thickness L5 (see Fig. 2) of the resin layer 32, it is difficult for the covering portion R11 of the inner excess resin portion 11 to peel away from the terminal 20A.

In the method of measuring the measurement data shown in Fig. 6, the strength is the strength at a the time at which the terminal was fixed and the laminate was pulled up in a direction orthogonal to the terminal sealed surface.

As described with reference to Fig. 1 through Fig. 5, at the laminated battery 1A, the length L4 (see Fig. 3) of the covering portion R11 is greater than or equal to one-fifth of the length L6 (see Fig. 3) from the end EA20 at the side of the electrode body 40 to the metal layer 31. The length L7 (see Fig. 4) of the covering portion R11 is greater than or equal to one-fifth of the length L8 (see Fig. 4) from the end EA20 at the side of the electrode body 40 to the metal layer 31.
Due thereto, owing to the covering portion R11, it is difficult for the facing surface SA20 of the terminal 20A and the laminate sheet 30 to physically contact one another. Namely, the occurrence of short-circuiting is more reliably prevented. Moreover, it is difficult for the covering portion of the inner excess resin portion to peel away from the terminal. As a result, the stability and structural reliability of the laminated battery 1A are even better.

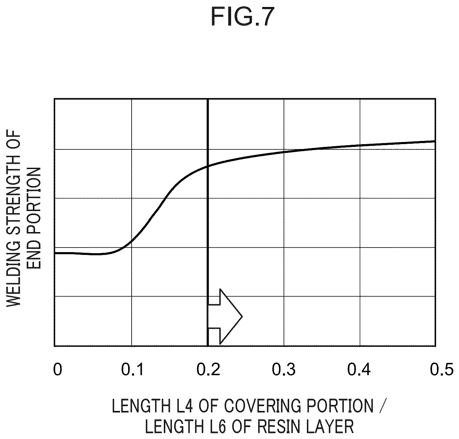

The relationship between the length L4 (see Fig. 3) of the covering portion R11 of the inner excess resin portion 11 and the length L6 (see Fig. 3) from the end EA20 at the side of the electrode body 40 to the metal layer 31 is described hereinafter with reference to Fig. 7. Fig. 7 illustrates measured data of the welding strength of the end portion (including the end EA20) of the terminal 20A with respect to ratio (L4/L6) of the time when the tab film 10A contains acid-modified polypropylene and the resin layer 32 of the laminate sheet 30 contains non-modified polypropylene. The length L6 (see Fig. 3) and the length L8 (see Fig. 4) are the same.
As illustrated in Fig. 7, the welding strength of the end portion depends on the ratio (L4/L6). It can be understood that the welding strength of the end portion in cases in which the ratio (L4/L6) is greater than or equal to 0.2 is greatly improved over the welding strength of the end portion in cases in which the ratio (L4/L6) is less than 0.2. As a result, it can be understood empirically that, if the length L4 (see Fig. 3) of the covering portion R11 of the inner excess resin portion 11 is greater than or equal to one-fifth of the length L6 (see Fig. 3) from the end EA20 at the side of the electrode body 40 to the metal layer 31, it is difficult for the covering portion R11 of the inner excess resin portion 11 to peel away from the terminal 20A.
The method of measuring the measurement data shown in Fig. 7 was similar to the method of measuring the measurement data shown in Fig. 6.

As described with reference to Fig. 1 through Fig. 5, in the laminated battery 1A, the inner excess resin portion 11 projects out from the entire periphery of the end EA20 at the side of the electrode body 40 of the terminal 20A.
Due thereto, at the time when the laminated battery 1A is exposed to high temperatures, it is easier for the inner excess resin portion 11 to volumetrically expand toward the opposite side from the laminate sheet 30 of the inner excess resin portion 11, than in a case in which the inner excess resin portion 11 does not project out from the entire periphery of the end EA20 at the side of the electrode body 40 of the terminal 20A. Namely, the stress that the laminate sheet receives due to volumetric expansion of the inner excess resin portion 11 is mitigated. As a result, even when the laminated battery 1A is exposed to a high-temperature
environment, the structural reliability of the laminate sheet is excellent.

As described with reference to Fig. 1 through Fig. 5, at the laminated battery 1A, the electrode body 40 includes plural unit electrode bodies. The unit electrode body is structured by a positive electrode collector, a positive electrode layer, an electrolyte layer, a negative electrode layer and a negative electrode collector, which are layered in this order. Due thereto, the energy density of the laminated battery 1A is even better.

As described with reference to Fig. 1 through Fig. 5, at the laminated battery 1A, the facing surfaces SA20 of the terminals 20A are electrically connected to the electrode body 40. Due thereto, there is no need to sufficiently ensure length L10 (see Fig. 3 and Fig. 4) in the longitudinal direction (the X-axis direction) that is orthogonal to the facing surfaces SA20 of the terminals 20A, in order to electrically connect the terminals 20A and the electrode body 40. Namely, the length L10 in the longitudinal direction (the X-axis direction) of the terminals 20A can be made to be shorter than conventionally. As a result, the structural efficiency of the laminated battery 1A is even better.

### (2) Battery Stack

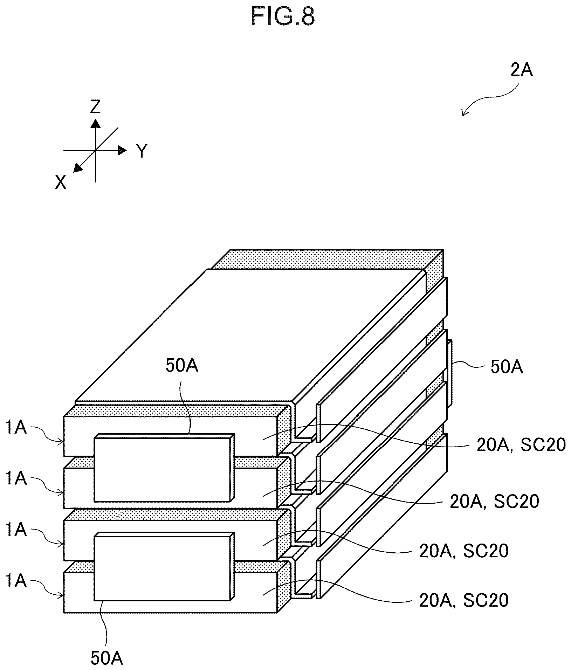

As illustrated in Fig. 8, a battery stack 2A relating to the first embodiment of the present disclosure has the plural laminated batteries 1A and plural inter-battery connecting terminals 50A. The plural laminated batteries 1A are stacked along the vertical direction (the Z-axis direction) that is parallel to the front surfaces SA40 of the electrode bodies 40. The plural inter-battery connecting terminals 50A are electrically connected to the terminals 20A, and connect the plural laminated batteries 1A in series.

The inter-battery connecting terminals 50A are parts (bus bars) for electrically connecting the respective, plural laminated batteries 1A in series. The inter-battery connecting terminal 50A is a single plate-shaped part.
The terminal 20A of the laminated battery 1A has an outer surface SC20 at the opposite side from the facing surface SA20 in the front-rear direction (the X-axis direction). The inter-battery connecting terminals 50A are mounted to the outer surfaces SC20 of the terminals 20A. The method of mounting the inter-battery connecting terminal 50A is not particularly limited, and examples are methods that use parts for fastening, and welding and the like. Parts for fastening include bolts, nuts, screws, rivets and pins. Welding includes metal welding and soldering. The material of the inter-battery connecting terminals 50A is a metal (e.g., stainless steel).

### (3) Method of Manufacturing Laminated Battery

The method of manufacturing a laminated battery of the first embodiment of the present disclosure is a method of manufacturing the laminated battery 1A. The method of manufacturing a laminated battery of the first embodiment includes a preparation step, a covering step, a fixing step, and a welding step. The preparation step, the covering step, the fixing step, and the welding step are executed in this order.

### (3.1) Preparation Step

In the preparation step, a structural body 60 and the one laminate sheet 30 are prepared. The structural body 60 has the electrode body 40 and the pair of terminals 20A that are electrically connected to the electrode body 40. It suffices for the methods of preparing the structural body 60 and the laminate sheet 30 respectively to be known methods.

### (3.2) Covering Step

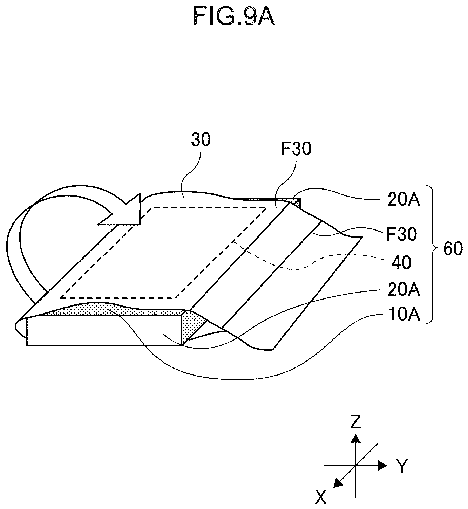

In the covering step, as illustrated in Fig. 9A, the laminate sheet 30 is folded over, and the electrode body 40 included in the structural body 60 is covered by the one laminate sheet 30. The method of covering the electrode body 40 by the laminate sheet 30 is not particularly limited, and, for example, may be a method in which creases F30 that match the shape of the electrode body 40 are formed in the laminate sheet 30 by a known method, and the laminate sheet 30 is folded over along the creases F30.

### (3.3) Fixing Step

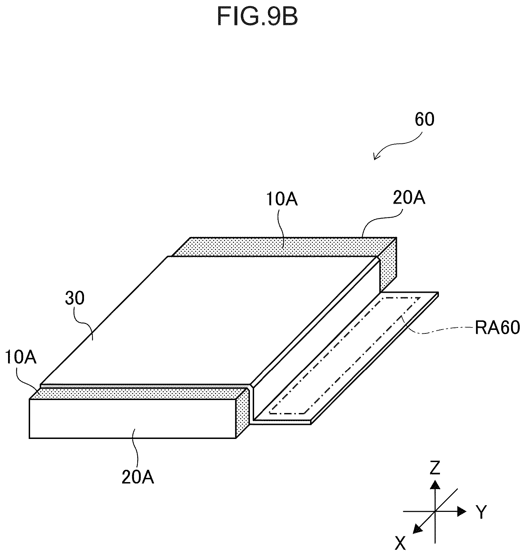

In the fixing step, as illustrated in Fig. 9B, a region RA60 at which the end portion of the folded-over laminate sheet 30 overlap one another is thermocompression bonded, and the shape of the laminate sheet 30, which is in a state of covering the electrode body 40, is fixed. It suffices for the method of thermocompression bonding the region RA60 to be a known method, and an example is a method using a heat bar.

### (3.4) Welding Step

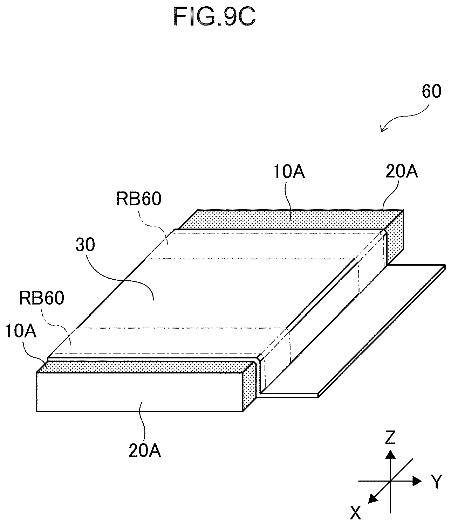

In the welding step, as illustrated in Fig. 9C, the terminals 20A and the laminate sheet 30 are welded via the tab film 10A with a heat bar 70, and the inner excess resin portion 11 that projects out from the end EA20 at the side of the electrode body 40 of the terminal 20A is formed.

Specifically, a total of four of the heat bars 70 are simultaneously pushed against the entire peripheries of both end portions RB60, which are in the longitudinal direction (the X-axis direction) of the laminate sheet 30, of the structural body 60 from four directions that are the upper side (the Z-axis positive direction), the lower side (the Z-axis negative direction), the left side (the Y-axis negative direction) and the right side (the Y-axis positive direction), respectively. Due thereto, the terminals 20A and the laminate sheet 30 are welded via the tab film 10A with the heat bar 70, and the inner excess resin portion 11 are formed. The both end portions RB60, which are in the longitudinal direction (the X-axis direction) of the laminate sheet 30, of the structural body 60 correspond to the thermocompression bonded portion 12 of the tab film 10A, respectively.

### (3.4.1) Heat Bar

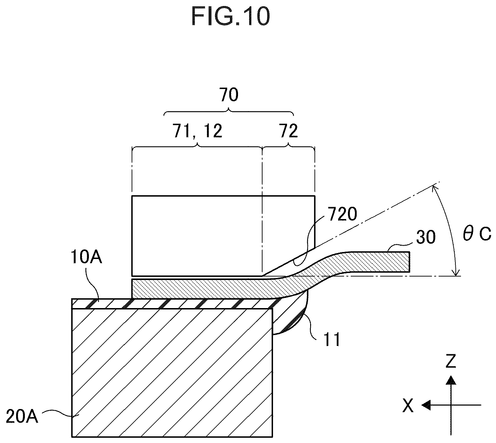

In the first embodiment, as illustrated in Fig. 10, the heat bar 70 has a planar portion 71 and an inclined portion 72. At the time of welding the terminal 20A and the laminate sheet 30, the planar portion 71 faces the terminal 20A via the laminate sheet 30 and the tab film 10A. The inclined portion 72 is continuous with the planar portion 71, and is inclined (in the Z-axis positive direction) toward the opposite side from the terminal 20A with respect to the planar portion 71. The inclined portion 72 includes a region 720 that does not face the terminal 20A via the laminate sheet 30 and the tab film 10A at the time of welding the terminal 20A and the laminate sheet 30. Angle θC (see Fig. 10) of the inclined surface of the inclined portion 72 with respect to the surface of the planar portion 71 that contacts the laminate sheet 30 is appropriately selected in accordance with the size and the like of the laminated battery 1A, and is preferably 10° - 45°.

### (3.5) Operation and Effects

As described with reference to Fig. 9A through Fig. 10, the method of manufacturing a laminated battery of the first embodiment includes a welding step in which the terminals 20A and the laminate sheet 30 are welded via the tab film 10A with the heat bar 70, and the inner excess resin portion 11 that projects out from the end EA20 at the side of the electrode body 40 of the terminal 20A is formed.

The laminated battery 1A that has excellent structural reliability of the laminate sheet even when exposed to a high-temperature environment is thereby obtained.

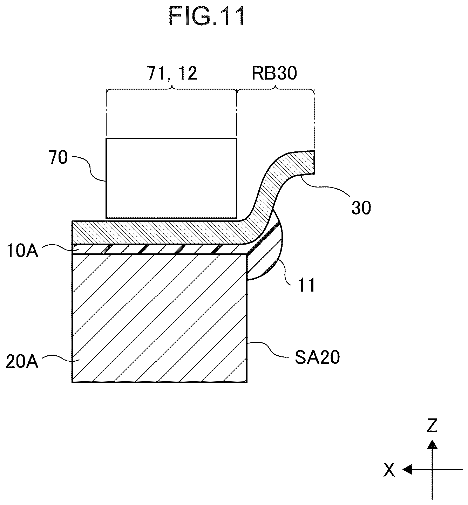

As described with reference to Fig. 9A through Fig. 10, in the method of manufacturing a laminated battery of the first embodiment, the heat bar 70 has the planar portion 71 and the inclined portion 72.
In a case in which the heat bar 70 has the planar portion 71 and does not have the inclined portion 72, at the time when the terminal 20A and the laminate sheet 30 are welded, it is easy for non-contacting specific portion RB30 of the laminate sheet 30 to warp upward (in the Z-axis direction positive direction) as illustrated in Fig. 11, due to the difference in the linear expansion coefficient of the tab film 10A and the linear expansion coefficient of the metal layer 31 contained in the laminate sheet 30. If the non-contacting specific portion RB30 of the laminate sheet 30 warps upward, it is difficult for the inner excess resin portion 11, which has the covering portion R11 (see Fig. 3 and Fig. 4) that covers the end portion R20A of the facing surface SA20 of the terminal 20A, to be formed.
On the other hand, in the first embodiment, at the time of welding the terminal 20A and the laminate sheet 30, warping of the non-contacting specific portion RB30 (see Fig. 11) of the laminate sheet 30 is suppressed by the inclined portion 72 of the heat bar 70. Due thereto, it is easy to form the inner excess resin portion 11 that has the covering portion R11 that covers the end portion R20A of the facing surface SA20 of the terminal 20A. In the method of manufacturing a laminated battery of the first embodiment, the laminated battery 1A whose stability and structural reliability are even better is obtained.

### (4) Second Embodiment

A laminated battery 1B of a second embodiment of the present disclosure is mainly similar to the laminated battery 1A of the first embodiment, except that end of the terminal at the side of the side of the electrode body 40 is chamfered.

The laminated battery 1B has the tab film 10A, a pair of terminals 20B, the laminate sheet 30 and the electrode body 40.

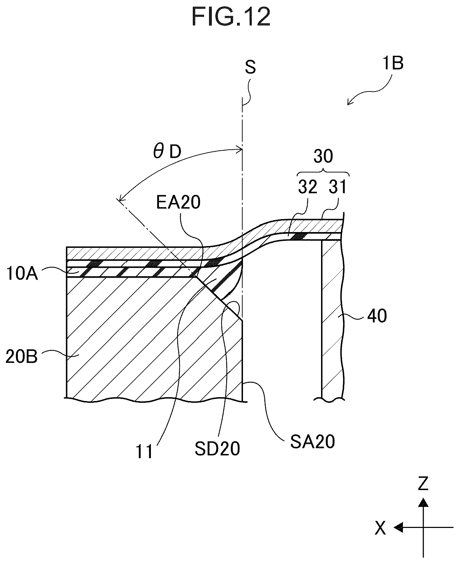

As illustrated in Fig. 12, the end EA20 at the side of the electrode body 40 of the terminal 20B is chamfered. In other words, the terminal 20B has chamfered surface SD20 that is continuous with the facing surface SA20. Angle θD (see Fig. 12) that is formed by the chamfered surface SD20 and the imaginary plane S that includes the facing surface SA20 of the terminal 20A is preferably 30° - 60°.

As described with reference to Fig. 12, at the laminated battery 1B, the end EA20 at the side of the electrode body 40 of the terminal 20B is chamfered.
Due thereto, the surface area of the region of the inner excess resin portion 11, which region does not contact at least one of the terminal 20B and the laminate sheet 30, is larger than in a case in which the end EA20 at the side of the electrode body 40 of the terminal 20B is not chamfered. Due thereto, the stress that the laminate sheet 30 receives due to the volumetric expansion of the inner excess resin portion 11 when the laminated battery 1B is exposed to high temperatures is mitigated more. As a result, the laminated battery 1B has even better structural reliability of the laminate sheet 30 even when exposed to a high-temperature environment.

### (5) Third Embodiment

A laminated battery 1C of a third embodiment of the present disclosure is mainly similar to the laminated battery 1A of the first embodiment, except that the tab film have outer excess resin portion.

The laminated battery 1C has tab film 10B, the pair of terminals 20A, the laminate sheet 30 and the electrode body 40.

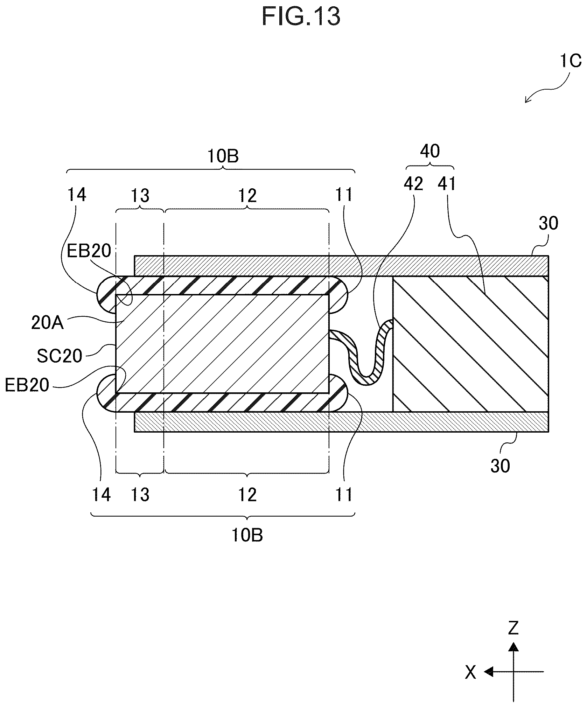

As illustrated in Fig. 13, the tab film 10B the tab film 10A has the inner excess resin portion 11, the thermocompression bonded portion 12, the non thermocompression bonded portion 13 and an outer excess resin portion 14. The outer excess resin portion 14 projects out from the entire periphery of an end EB20 at the side of the electrode body 40 of the terminal 20A. The inner excess resin portion 11 is not nipped between the terminal 20A and the laminate sheet 30. The inner excess resin portion 11, the thermocompression bonded portion 12, the non thermocompression bonded portion 13, and the end EB20 at the opposite side from the electrode body 40 are integral.

The outer excess resin portion 14 projects out from the end EB20, which is at the opposite side from the electrode body 40, of the terminal 20A. For example, the outer excess resin portion 14 is formed due to the molten material of the tab film 10B being pushed-out toward the end EB20 side that is the opposite side from the electrode body 40 of the terminal 20A, at the time when the thermocompression bonded portion 12 is formed by thermocompression bonding.

As described with reference to Fig. 13, at the laminated battery 1C, the tab film 10B further has the outer excess resin portion 14.

Due thereto, at the time when the laminated batteries 1C are stacked, owing to the existence of the outer excess resin portion 14, it is difficult for the terminal 20A of one of the adjacent laminated batteries 1C to physically contact the terminal 20A or the laminate sheet 30 of the other adjacent laminated battery 1C. Namely, the occurrence of short circuiting is prevented more reliably than in a case in which the tab film 10B does not have the outer excess resin portion 14. As a result, the stability and structural reliability of the laminated battery 1C are even better.

### (6) Fourth Embodiment

A battery stack 2B of a fourth embodiment of the present disclosure is similar to the battery stack 2A of the first embodiment, except that the shape of the inter-battery connecting terminals is different.

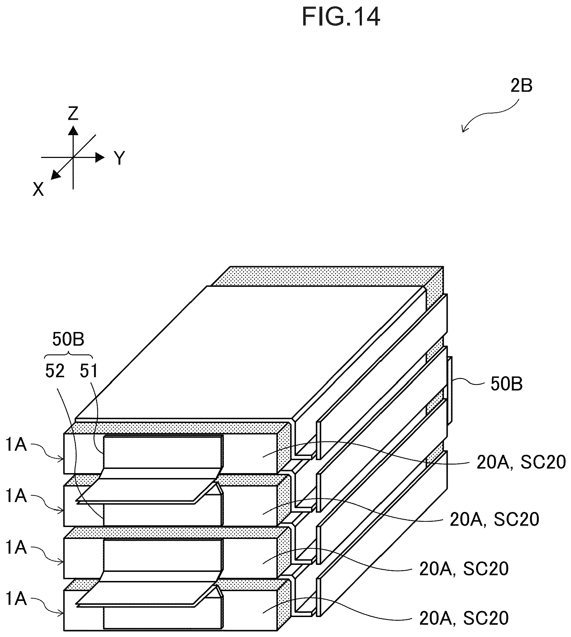

As illustrated in Fig. 14, the battery stack 2B has the plural laminated batteries 1A and plural inter-battery connecting terminals 50B. The plural inter-battery connecting terminals 50B are electrically connected to the terminals 20A, and connect the plural laminated batteries 1A in series.

The inter-battery connecting terminals 50B are parts (bus bars) for electrically connecting the respective, plural laminated batteries 1A in series.

The inter-battery connecting terminal 50B has a first terminal part 51 and a second terminal part 52. The first terminal part 51 is a plate-shaped part bent in the shape of the letter L. The first terminal part 51 is electrically connected to one of the pair of terminals 20A included in the laminated battery 1A. Hereinafter, the laminated battery 1A to which the first terminal part 51 is electrically connected is called the "battery with the first terminal part". The second terminal part 52 is a plate-shaped part bent in the shape of the letter L. The second terminal part 52 is electrically connected to one of the pair of terminals 20A included in the laminated battery 1A that is adjacent to the battery with the first terminal part among the plural laminated batteries 1A. Hereinafter, the laminated battery 1A to which the second terminal part 52 is electrically connected is called the "battery with the second terminal part". The first terminal part 51 and the second terminal part 52 are electrically connected.

The first terminal part 51 is mounted to the outer surface SC20 of the terminal 20A of the battery with the first terminal part. The second terminal part 52 is mounted to the outer surface SC20 of the terminal 20A of the battery with the second terminal part. The first terminal part 51 is mounted to the second terminal part 52. The method of mounting the first terminal part 51 and the second terminal part 52 respectively is not particularly limited, and examples thereof are methods similar to the methods exemplified as the method of mounting the inter-battery connecting terminals 50A of the first embodiment.

As described with reference to Fig. 14, the battery stack 2B has the plural laminated batteries 1A and the plural inter-battery connecting terminals 50B as illustrated in Fig. 14. The inter-battery connecting terminal 50B has the first terminal part 51 and the second terminal part 52.
Due thereto, the mass producibility of the battery stack 2B is better than in a case in which the inter-battery connecting terminals 50B do not have the first terminal part 51 and the second terminal part 52.

### (7) Modified Examples

In the first embodiment through the fourth embodiment, the first angle θA is greater than or equal to 90°, but may be less than 90°. In the first embodiment through the fourth embodiment, the second angle θB is greater than or equal to 90°, but may be less than 90°.

In the first embodiment through the fourth embodiment, the length L4 (see Fig. 3) is greater than or equal to one-half of the thickness L5 (see Fig. 2), but may be less than one-half of the thickness L5. In the first embodiment through the fourth embodiment, the length L7 (see Fig. 4) is greater than or equal to one-half of the thickness L5 (see Fig. 2), but may be less than one-half of the thickness L5 (see Fig. 2).

In the first embodiment through the fourth embodiment, the length L4 (see Fig. 3) is greater than or equal to one-fifth of the length L6 (see Fig. 3), but may be less than one-fifth of the length L6. In the first embodiment through the fourth embodiment, the length L7 (see Fig. 4) is greater than or equal to one-fifth of the length L8 (see Fig. 4), but may be less than one-fifth of the length L8.

In the first embodiment through the fourth embodiment, the inner excess resin portion 11 projects out from the entire periphery of the end EA20A at the side of the electrode body 40 of the terminal 20A, but may project out from a portion of the entire periphery of the end EA20 at the side of the electrode body 40 of the terminal 20A.

In the first embodiment through the fourth embodiment, the electrode body 40 has the plural unit electrode bodies 41, but may have one, plural unit electrode body 41. In the first embodiment through the fourth embodiment, the unit electrode body 41 has the solid electrolyte layer, but may use a non-aqueous electrolyte liquid instead of the solid electrolyte layer.

In the first embodiment through the fourth embodiment, the side surface member is a terminal, but does not have to be terminal. For example, the side surface member may be covers made of metal that do not function as terminals. The covers made of metal may have through-holes for electrically connecting inter-battery connecting terminals, which are at the exteriors of laminated batteries, and terminals of the laminated batteries.

In the first embodiment through the fourth embodiment, the facing surfaces of the terminals are electrically connected to the electrode body, but the facing surfaces of the terminals do not have to be electrically connected to the electrode body.

In the first embodiment through the fourth embodiment, the pair of terminals face one another via the electrode body, but do not have to face one another via the electrode body.

In the method of manufacturing a laminated battery of the first embodiment, the heat bars have the inclined portions, but do not have to have the inclined portions.

In the first embodiment through the fourth embodiment, the laminated battery is a laminated lithium secondary battery using a solid electrolyte, but may be a secondary battery such as a nickel-metal hydride battery.

In the first embodiment through the fourth embodiment, the shape of the terminals is that of a rectangular parallelopiped object, but does not have to be that of a rectangular parallelopiped object.

In the first embodiment through the fourth embodiment, the length L3 (see Fig. 2) is longer than the length L1 (see Fig. 2), but may be the same as the length L1 or shorter than the length L1.

In the first embodiment, the inter-battery connecting terminal is a single plate-shaped part, but the shape of the inter-battery connecting terminal is not limited provided that it is a shape that connects the plural laminated batteries 1A in series. In the fourth embodiment, the first terminal part and the second terminal part each is a plate-shaped part bent in the shape of the letter L. However, the respective shapes of the first terminal part and the second terminal part are not particularly limited provided that they are shapes that connect the plural laminated batteries 1A in series and electrically connect the first terminal part and the second terminal part.

In the first embodiment through the fourth embodiment, the non thermocompression bonded portion is not interposed between the inner excess resin portion 11 and the thermocompression bonded portion 12 in the longitudinal direction (the X-axis direction). However, the non thermocompression bonded portion may be interposed between the inner excess resin portion 11 and the thermocompression bonded portion 12. In other words, in the first embodiment through the fourth embodiment, in the longitudinal direction (the X-axis direction), the position of the X-axis negative direction end portion of the thermocompression bonded portion 12 and the position of the end EA20 at the side of the electrode body 40 of the terminal 20A are the same, but may be different. For example, in the longitudinal direction (the X-axis direction), the position of the X-axis negative direction end portion of the thermocompression bonded portion 12 may be in a range of within 1 mm from the position of the end EA20 at the side of the electrode body 40 of the terminal 20A.

The disclosure of Japanese Patent Application No. 2023-001929 filed on January 10, 2023 is, in its entirety, incorporated by reference into the present specification.

All publications, patent applications, and technical standards mentioned in the present specification are incorporated by reference into the present specification to the same extent as if such individual publication, patent application, or technical standard was specifically and individually indicated to be incorporated by reference.

## Claims

1. A laminated battery, comprising:
an electrode body;
a side surface member disposed at a side surface of the electrode body;
a laminate sheet covering the electrode body; and
a tab film disposed between the side surface member and the laminate sheet, wherein:
the side surface member and the laminate sheet are welded via the tab film, and
the tab film has an inner excess resin portion projecting out from an end, which is at a side of the electrode body, of the side surface member.

2. The laminated battery of Claim 1, wherein:
the side surface member has a facing surface that faces the side surface of the electrode body,
in a cross-section of the laminated battery that is cut along a direction orthogonal to the side surface of the electrode body, an angle formed by the facing surface of the side surface member, and a direction in which the laminate sheet extends toward a side of the electrode body from a specific region of the laminate sheet, is greater than or equal to 90°, and
the specific region is a region of the laminate sheet that intersects an imaginary plane that includes the facing surface of the side surface member.

3. The laminated battery of Claim 1, wherein:
the laminate sheet has a metal layer, and a resin layer layered on a surface of the metal layer at a side of the electrode body,
the side surface member has a facing surface that faces the side surface of the electrode body,
the inner excess resin portion has a covering portion that covers an end portion of the facing surface of the side surface member, and
in a cross-section of the laminated battery that is cut along a direction orthogonal to the side surface of the electrode body, a length, in a direction parallel to the facing surface of the side surface member, of the covering portion from an end at a side of the electrode body is greater than or equal to one-half of a thickness of the resin layer.

4. The laminated battery of Claim 1, wherein:
the laminate sheet has a metal layer, and a resin layer layered on a surface of the metal layer at a side of the electrode body,
the side surface member has a facing surface that faces the side surface of the electrode body,
the inner excess resin portion has a covering portions that covers an end portion of the facing surface, and
in a cross-section of the laminated battery that is cut along a direction orthogonal to the side surface of the electrode body, a length, in a direction parallel to the facing surface of the side surface member, of the covering portion from an end at a side of the electrode body is greater than or equal to one-fifth of a length, in a direction parallel to the facing surface of the side surface member, from the end at the side of the electrode body to the metal layer.

5. The laminated battery of Claim 1, wherein the end of the side surface member at the side of the electrode body is chamfered.

6. The laminated battery of Claim 1, wherein the tab film further has an outer excess resin portion that projects out from an end, at an opposite side from the electrode body, of the side surface member.

7. The laminated battery of Claim 1, wherein the inner excess resin portion projects out from an entire periphery of the end of the side surface member at the side of the electrode body.

8. The laminated battery of Claim 1, wherein:
the electrode body has at least one unit electrode body, and
the unit electrode body comprises a positive electrode collector, a positive electrode layer, an electrolyte layer, a negative electrode layer and a negative electrode collector, which are layered in this order.

9. The laminated battery of any one of Claim 1 through Claim 8, wherein:
the side surface member is a terminal,
the terminal has a facing surface that faces the side surface of the electrode body, and
the facing surface is electrically connected to the electrode body.

10. The laminated battery of Claim 9, comprising a pair of terminals facing one another via the electrode body.

11. A battery stack, comprising:
a plurality of the laminated batteries of Claim 10 that are stacked along a direction parallel to the side surfaces of the electrode bodies; and
a plurality of inter-battery connecting terminals electrically connected to the terminals and connecting the plurality of laminated batteries in series.

12. The battery stack of Claim 11, wherein:
the plurality of laminated batteries include a first battery and a second battery adjacent to the first battery,
the plurality of inter-battery connecting terminals include a first inter-battery connecting terminal electrically connecting the first battery and the second battery, and
the first inter-battery connecting terminal has:
a first terminal part electrically connected to one of the pair of terminals included in the first battery, and
a second terminal part electrically connected to one of the pair of terminals included in the second battery, and
the first terminal part and the second terminal part are electrically connected.

13. A method of manufacturing a laminated battery having an electrode body, a side surface member disposed at a side surface of the electrode body, a laminate sheet covering the electrode body, and a tab film disposed between the side surface member and the laminate sheet,
the method comprising a step of welding the side surface member and the laminate sheet via the tab film with a heat bar, and forming an inner excess resin portion that projects out from an end, which are at a side of the electrode body, of the side surface member.

14. The method of manufacturing a laminated battery of Claim 13, wherein:
the heat bar has:
a planar portion facing the side surface member via the laminate sheet and the tab film at a time of welding the side surface member and the laminate sheet, and
an inclined portion continuous with the planar portion, and inclined toward an opposite side from a side of the side surface member with respect to the planar portion, and
the inclined portion includes a region that does not face the side surface member via the laminate sheet and the tab film at the time of welding the side surface member and the laminate sheet.
